# EUROPEAN PATENT APPLICATION

(11) **EP 4 293 791 A1**
(43) Date of publication of application: **20.12.2023**
(21) Application number: 21925838.1
(22) Date of filing: 20.12.2021
(51) Int. Cl.: H01M 10/18, H01M 10/12, H01M 50/204

(54) **BIPOLAR STORAGE BATTERY**

(30) Priority: 10.02.2021 JP 2021020218
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: TANAKA Hiroki, Tokyo 100-8322 (JP); NAKAJIMA Yasuo, Tokyo 100-8322 (JP); SUYAMA Kenichi, Tokyo 100-8322 (JP); TANAKA Akira, Tokyo 100-8322 (JP); TAIRA Yoshinobu, Jyoban-shimofunao-machi, Iwaki-shi, Fukushima 972- 8501 (JP); HIROTA Kenji, Jyoban-shimofunao-machi, Iwaki-shi, Fukushima 972- 8501 (JP)
(74) Representative: Grünecker Patent- und Rechtsanwälte PartG mbB
(86) International application number: PCT/JP2021/047000
(87) International publication number: WO 2022/172595

(57) **Abstract**

There is provided a bipolar storage battery that can prevent outward leakage of an electrolytic solution and reduction of mechanical strength by strongly joining plates each holding a cell member, thereby ensuring hermeticity of the inside of a cell and the mechanical strength, and also making the bipolar storage battery compact while reducing the number of components. A bipolar lead-acid battery (1) includes an internal frame unit (11) including a bipolar plate (111) in which a positive pole (120) is provided on one surface and a negative pole (110) is provided on another surface, and an internal rim (112) provided in an outer edge of the bipolar plate (111). A plurality of the internal frame units (11) is stacked and adjacent ones of the internal rims (112) are welded to each other. A ratio of a value of a width L1 of the internal rim (112) to a value indicating a depth of welding between the rims is equal to or higher than 2.7 times and is equal to or lower than 16.0 times.

## Description

### Technical Field

Embodiments of the present invention relate to a bipolar storage battery.

### Background Art

In recent years, power generation facilities using natural energy such as sunlight and wind power have been increasing. In such a power generation facility, an amount of power generation cannot be controlled, and thus a power load is leveled using a storage battery. That is, when the amount of power generation is larger than a consumption, a difference is charged into the storage battery, and when the amount of power generation is smaller than a consumption, a difference is discharged from the storage battery. As the above-described storage battery, a lead-acid battery is frequently used from the viewpoint of economic efficiency, safety, and the like.

In such a lead-acid battery, a substrate (bipolar plate) made of resin is provided inside a frame (rim) made of resin having a picture frame shape, for example, and a positive lead layer and a negative lead layer are disposed on one surface and another surface of the substrate. A positive active material layer is adjacent to the positive lead layer. A negative active material layer is adjacent to the negative lead layer. In addition, a glass mat (electrolytic layer) containing an electrolytic solution is disposed inside a spacer made of resin having a picture frame shape. A plurality of the frames and a plurality of the spacers are alternately stacked and assembled.

Furthermore, the positive lead layer and the negative lead layer are directly joined in a plurality of perforations formed in the substrate. That is, the lead-acid battery is a bipolar (bipolar) lead-acid battery in which a plurality of the substrates each having the perforations (communication holes) that allow the one surface side and the other surface side to communicate with each other, and a plurality of cell members are alternately stacked. Each of the cell members includes a positive pole in which the positive active material layer is provided on the positive lead layer, a negative pole in which the negative active material layer is provided on the negative lead layer, and the electrolytic layer interposed between the positive pole and the negative pole. The positive lead layer of one cell member and the negative lead layer of another cell member enter the inside of the perforations of the substrate to be joined together, so that the cell members are connected in series.

Here, to join the frame and the spacer together, for example, welding using ultrasonic waves is performed as described in PTL 1 below. In addition, the bipolar storage battery is configured by being accommodated in an exterior case so that no stress is applied to a joined portion from the outside.

### Citation List

### Patent Literature

PTL 1: JP 6571091 B2

### Summary of Invention

### Technical Problem

To keep hermeticity and mechanical strength with such a configuration, however, the number of components constituting the bipolar storage battery may increase because it is necessary to use other components to reinforce the strength in joining in some cases, for example. On the other hand, if the number of components is reduced blindly, there may occur a problem, such as leakage of an electrolytic solution to the outside of the battery, due to insufficient mechanical strength against external stress.

An object of the present invention is to provide a bipolar storage battery that can prevent outward leakage of an electrolytic solution and reduction of mechanical strength by strongly joining plates each holding a cell member, thereby ensuring hermeticity of the inside of a cell and the mechanical strength, and also making the bipolar storage battery compact while reducing the number of components.

### Solution to Problem

A bipolar storage battery according to one aspect of the present invention includes: an internal frame unit including a bipolar plate in which a positive pole is provided on one surface and a negative pole is provided on another surface, and an internal rim provided in an outer edge of the bipolar plate; and an end frame unit including an end plate constituting a cell in conjunction with the bipolar plate facing the end plate, and an end rim provided in an outer edge of the end plate, a plurality of the internal frame units being stacked and the end frame unit being provided in each of opposite ends along a direction in which the internal frame units are stacked, adjacent ones of the internal rims being welded to each other and one of the internal rims and the end rim adjacent to each other being welded to each other, in which a ratio of a value of a width of the internal rim or the end rim to a value indicating a depth of welding between the rims is equal to or higher than 2.7 times and is equal to or lower than 16.0 times.

### Advantageous Effects of Invention

According to the present invention, since the plates each holding a cell member can be strongly joined together, it is possible to provide the bipolar storage battery that can prevent outward leakage of an electrolytic solution and reduction of mechanical strength, thereby ensuring hermeticity of the inside of a cell and the mechanical strength, and also making the bipolar storage battery compact while reducing the number of components.

Specifically, when the internal frame unit and the end frame unit are welded and stacked, the ratio of the value of a width L1 of the internal rim or the end rim to the value indicating the depth of welding is equal to or higher than 2.7 times and is equal to or lower than 16.0 times. By performing joining at such a ratio, the internal frame unit and the end frame unit are strongly joined together. Therefore, it is possible to prevent the outward leakage of the electrolytic solution and the reduction of the mechanical strength to ensure the hermeticity of the inside of the cell and the mechanical strength.

In addition, since the hermeticity and mechanical strength of the bipolar storage battery can be ensured by using only required constituent elements for constituting the bipolar storage battery, it is possible to make the bipolar storage battery compact while reducing the number of components.

### Brief Description of Drawings

FIG. 1 is a schematic cross-sectional view illustrating a schematic structure of a bipolar lead-acid battery according to an embodiment of the present invention;
FIG. 2 is a cross-sectional view particularly illustrating, in an enlarged manner, a structure of an internal frame unit in the bipolar lead-acid battery according to the embodiment of the present invention;
FIG. 3 is an explanatory view for explaining a depth of welding regarding welding used in the embodiment of the present invention;
FIG. 4 is a graph illustrating test results obtained for the embodiment of the present invention; and
FIG. 5 is a graph illustrating test results obtained for the embodiment of the present invention.

### Description of Embodiments

Hereinafter, an embodiment of the present invention will be described in detail with reference to the drawings. Note that the embodiment described below illustrates an example of the present invention. In addition, various changes or improvements can be added to the present embodiment, and a mode to which such changes or improvements are added can also be included in the present invention. This embodiment and modifications thereof are included in the scope and gist of the invention, and are included in the scope of the invention described in the claims and its equivalents. Note that, hereinafter, a lead-acid battery will be described as an example from among various storage batteries.

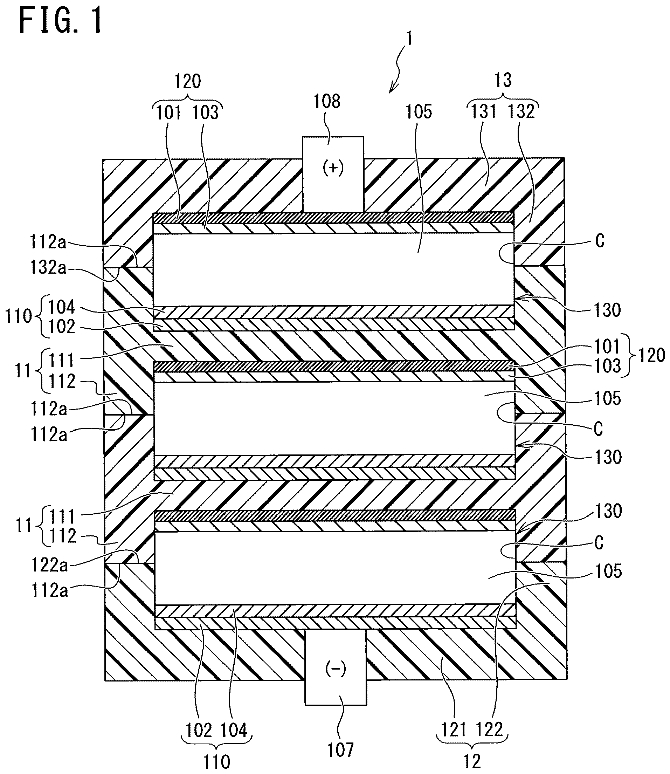

A bipolar lead-acid battery according to the embodiment of the present invention will be described with reference to FIG. 1. FIG. 1 is a schematic cross-sectional view illustrating a schematic structure of a bipolar lead-acid battery 1 according to the embodiment of the present invention.

The bipolar lead-acid battery 1 illustrated in FIG. 1 includes an internal frame unit (frame unit) 11, a first end frame unit 12 (frame unit), and a second end frame unit (frame unit) 13 arranged at a position facing the first end frame unit 12 with the internal frame unit 11 interposed therebetween.

A plurality of the internal frame units 11 is stacked between the first end frame unit 12 and the second end frame unit 13 to form the bipolar lead-acid battery 1 having, for example, a substantially rectangular parallelepiped shape. The number of internal frame units 11 to be stacked is set such that the storage capacity of the bipolar lead-acid battery 1 has a desired numerical value.

In addition, a negative terminal 107 is fixed to the first end frame unit 12, and a negative pole 110 and the negative terminal 107 fixed to the first end frame unit 12 are electrically connected. On the other hand, a positive terminal 108 is fixed to the second end frame unit 13, and a positive pole 120 and the positive terminal 108 fixed to the second end frame unit 13 are electrically connected.

Each of the internal frame units 11 includes a substrate (hereinafter, such a substrate is appropriately referred to as a "bipolar plate") 111 having a rectangular planar shape in which a positive pole 120 is provided on one surface and a negative pole 110 is provided on another surface, and an internal rim 112 having, for example, a quadrangular frame shape (picture frame shape) provided in an outer edge of the bipolar plate 111.

The bipolar plate 111 of each of the internal frame units 11 is arranged between cell members 130 adjacent in a stacking direction (vertical direction in FIG. 1) of the cell members 130. The internal rims 112 of the internal frame units 11 include joining surfaces 112a facing each other in the stacking direction (vertical direction in FIG. 1) of the cell members 130.

The bipolar plate 111 is integrated with the inside of each of the internal rims 112. In addition, the bipolar plate 111 is positioned in the middle of the internal rim 112 in a thickness direction (vertical direction in FIG.1) of the internal rim 112. The internal rim 112 has a larger thickness than a thickness of the bipolar plate 111.

The internal frame unit 11 is formed of a thermoplastic resin (e.g., polyethylene, polypropylene, polystyrene, polyvinyl chloride, polymethyl methacrylate (acrylic resin), acrylonitrile-butadiene-styrene copolymer (ABS), polyamide (nylon), or polycarbonate). These thermoplastic resins are excellent in moldability and also excellent in sulfuric acid resistance. Hence, for example, even when an electrolytic solution comes into contact with the bipolar plate 111, decomposition, deterioration, corrosion, and the like hardly occur in the bipolar plate 111.

The bipolar plate 111 is provided with a communication hole (not illustrated) that allows the one surface and the other surface to communicate with each other. A positive lead layer 101 and a negative lead layer 102 are joined via the inside of the communication hole, so that they are electrically connected to each other, and conduction between the positive pole 120 and the negative pole 110 is achieved.

The positive pole 120 includes the positive lead layer 101 made of lead or a lead alloy and arranged on the one surface of the bipolar plate 111, and a positive active material layer 103 arranged on the positive lead layer 101. This positive lead layer 101 is bonded to the one surface of the bipolar plate 111 by an adhesive layer (not illustrated) such as an adhesive provided between the one surface of the bipolar plate 111 and the positive lead layer 101. Accordingly, the adhesive layer, the positive lead layer 101, and the positive active material layer 103 are stacked in this order on the one surface (in the drawings such as FIG. 1, a surface facing downward on the plane of paper) of the bipolar plate 111.

The negative pole 110 includes the negative lead layer 102 made of lead or a lead alloy and arranged on the other surface (in the drawings such as FIG. 1, a surface facing upward on the plane of paper) of the bipolar plate 111, and a negative active material layer 104 arranged on the negative lead layer 102. This negative lead layer 102 is bonded to the other surface of the bipolar plate 111 by an adhesive layer (not illustrated) such as an adhesive provided between the other surface of the bipolar plate 111 and the negative lead layer 102. These positive pole 120 and negative pole 110 are electrically connected through the communication hole described above.

The first end frame unit 12 includes a first end plate 121 having a rectangular planar shape, and a first end rim 122 having, for example, a quadrangular frame shape (picture frame shape) provided in an outer edge of the first end plate 121. The first end plate 121 is integrated with the inside of the first end rim 122. The first end frame unit 12 is also made of a thermoplastic resin having sulfuric acid resistance.

The first end frame unit 12 surrounds a side surface and the negative pole 110 side of the cell member 130 at one end side (lower end side in FIG. 1) of the bipolar lead-acid battery 1. The first end plate 121 surrounds the negative pole 110 side of the cell member 130, and the first end rim 122 surrounds the side surface of the cell member 130.

The first end plate 121 is arranged in parallel with the bipolar plate 111 of the internal frame unit 11, and the first end rim 122 is arranged so as to be in contact with the internal rim 112 of the internal frame unit 11 positioned adjacent thereto. That is, the first end rim 122 includes a joining surface 122a facing the internal rim 112 of the internal frame unit 11 in the stacking direction (vertical direction in FIG. 1) of the cell members 130.

The first end plate 121 has a larger thickness than the thickness of the bipolar plate 111. The first end rim 122 has a larger thickness than the thickness of the first end plate 121. The first end plate 121 is set so as to be positioned at one end (lower end in FIG. 1) of the first end rim 122 in a thickness direction (vertical direction in FIG. 1) of the first end rim 122.

A negative lead layer 102 is provided on another surface of the first end plate 121. A negative active material layer 104 is provided on the negative lead layer 102 on the first end plate 121. Between the negative active material layer 104 on the first end plate 121 and the positive active material layer 103 of the bipolar plate 111 facing the negative active material layer 104, an electrolytic layer 105 is provided that is made of a glass fiber mat or the like impregnated with an electrolytic solution such as sulfuric acid.

The second end frame unit 13 includes a second end plate 131 having a rectangular planar shape, and a second end rim 132 having, for example, a quadrangular frame shape (picture frame shape) provided in an outer edge of the second end plate 131. The second end plate 131 is integrated with the inside of the second end rim 132. The second end frame unit 13 is also made of a thermoplastic resin having sulfuric acid resistance.

The second end frame unit 13 surrounds a side surface and the positive pole 120 side of the cell member 130 at another end side (upper end side in FIG. 1) of the bipolar lead-acid battery 1. The second end plate 131 surrounds the positive pole 120 side of the cell member 130, and the second end rim 132 surrounds the side surface of the cell member 130.

The second end plate 131 is arranged in parallel with the bipolar plate 111 of the internal frame unit 11, and the second end rim 132 is arranged so as to be in contact with the internal rim 112 of the internal frame unit 11 positioned adjacent thereto. That is, the second end rim 132 includes a joining surface 132a facing the internal rim 112 of the internal frame unit 11 in the stacking direction (vertical direction in FIG. 1) of the cell members 130.

The second end plate 131 has a larger thickness than the thickness of the bipolar plate 111. The second end rim 132 has a larger thickness than the thickness of the second end plate 131. The second end plate 131 is set so as to be positioned at another end (upper end in FIG. 1) of the second end rim 132 in a thickness direction (vertical direction in FIG. 1) of the second end rim 132.

A positive lead layer 101 is provided on one surface of the second end plate 131. A positive active material layer 103 is provided on the positive lead layer 101 on the second end plate 131. Between the positive active material layer 103 on the second end plate 131 and the negative active material layer 104 of the bipolar plate 111 facing the positive active material layer 103, an electrolytic layer 105 as described is provided.

In the bipolar lead-acid battery 1 of the embodiment of the present invention having such a configuration, as described above, the bipolar plate 111, the positive lead layer 101, the positive active material layer 103, the negative lead layer 102, and the negative active material layer 104 constitute a bipolar electrode 140. The bipolar electrode is an electrode having both positive and negative pole functions in one electrode. The bipolar lead-acid battery 1 of the embodiment of the present invention has a battery configuration in which the plurality of cell members 130 each formed by interposing the electrolytic layer 105 between the positive pole 120 and the negative pole 110 is alternately stacked and assembled to connect the cell members 130 in series.

The above-described cell members 130 are arranged to be stacked at intervals in the stacking direction (vertical direction in FIG. 1) as illustrated in FIG. 1. The internal frame units 11, the first end frame unit 12, and the second end frame unit 13 form a plurality of cells (spaces) C that individually accommodates the plurality of cell members 130.

The cell members 130 adjacent in the stacking direction are electrically connected in series. Therefore, the bipolar plate 111 interposed between the cell members 130 adjacent in the stacking direction includes the above-described communication hole for electrically connecting the positive lead layer 101 and the negative lead layer 102.

In addition, the joining surfaces 112a of the internal rims 112 of the internal frame units 11 adjacent to each other, the joining surface 122a of the end rim 122 of the first end frame unit 12 and the joining surface 112a of the internal rim 112 of the internal frame unit 11 adjacent thereto, and the joining surface 132a of the end rim 132 of the second end frame unit 13 and the joining surface 112a of the internal rim 112 of the internal frame unit 11 adjacent thereto are welded and joined to each other.

Here, for example, various welding methods such as vibration welding, ultrasonic welding, and hot plate welding can be adopted as a method of welding. Among the welding methods, the vibration welding is performed by vibrating surfaces to be joined while pressurizing the surfaces at the time of joining, and has a fast cycle of welding and good reproducibility. Therefore, the vibration welding is more preferably used.

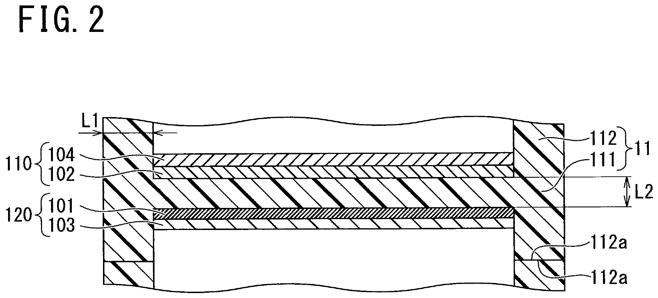

Here, FIG. 2 is a cross-sectional view particularly illustrating, in an enlarged manner, a structure of the internal frame unit 11 in the bipolar lead-acid battery 1 according to the embodiment of the present invention. That is, the internal frame unit 11 illustrated in FIG. 2 is joined to the internal frame unit 11 stacked from a lower direction in the drawing so as to be further stacked thereon.

Specifically, in the vibration welding that is performed to join together the joining surfaces 112a of the internal rims 112 of the internal frame units 11 adjacent to each other, one of the joining surfaces 112a is pressed against the other joining surface 112a and vibrated to generate frictional heat, so that the one joining surface 112a and the other joining surface 112a are melted and joined together.

Furthermore, in the present embodiment, a value of a depth of welding in the vibration welding is set such that the following relationship is established between the depth of welding and a width of each of the internal rims 112.

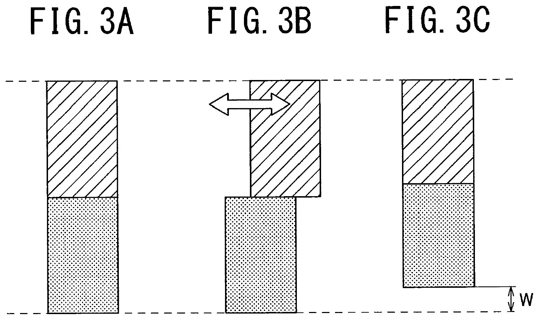

Here, the depth of welding will be described with reference to FIG. 3. FIG. 3 is an explanatory view for explaining the depth of welding regarding the welding used in the embodiment of the present invention. FIG. 3 illustrates a state in which two members illustrated on the upper and lower sides are welded using the vibration welding. From the left, FIG. 3A illustrates a state in contact, FIG. 3B illustrates a state during the vibration welding, and FIG. 3C illustrates a state after the welding. That is, FIGS. 3A to 3C illustrate the transition of the welding processing. In the following description, the member on the upper side is appropriately referred to as an "upper member", and the member on the lower side is appropriately referred to as a "lower member".

FIG. 3A illustrates the state in which the upper member and the lower member are in contact with each other. In this state, the vibration welding is not yet performed, and the upper member and the lower member are only in contact with each other. In addition, in FIG. 3, broken lines are drawn at an end of the upper member and an end of the lower member. That is, a portion between the broken line and the broken line is a height of the upper member and the lower member before being welded.

From this state, while both the upper member and the lower member are being pressurized in a vertical direction, the member(s) is(are) vibrated. Note that the member(s) to be vibrated may be either the upper member or the lower member, or may be both the members. As indicated by an arrow in FIG. 3B, the upper member is vibrated here. At this time, the lower member is fixed. When the upper member vibrates, shear heat is generated by friction at a joined portion where the upper member and the lower member are in contact with each other, and the upper member and the lower member are welded together. Note that conditions for performing the vibration welding include frequency, amplitude, time, stress, and the like.

In this manner, joining surfaces of the upper member and the lower member melt to be joined together. Therefore, as illustrated in FIG. 3C, after joining, the height of the upper member and the lower member becomes shorter than that before joining due to the melting of the joining surfaces. A difference between the height of the upper member and the lower member before joining and the height of the upper member and the lower member after joining is the depth of welding indicated by reference character W in FIG. 3. The depth of welding is also one of the conditions for performing the above-described vibration welding, and is set as follows in the present embodiment.

That is, a ratio of a value L1 of a width of each of the internal rims 112 or the first end rim 122 and the second end rim 132 (hereinafter, when the first end rim 122 and the second end rim 132 are collectively referred to, the rims are referred to as "end rims") to the value w indicating the depth of welding between the adjacent rims is set to be equal to or higher than 2.7 times and be equal to or lower than 16.0.

This ratio is one of the conditions to be set when the vibration welding is performed. If this ratio is out of the above range, it is difficult to obtain sufficient welding strength.

The above ratio is a value that can be derived by performing a tensile test and calculating a tensile strength retention rate from unwelded breaking strength. Specifically, after samples for performing the tensile test were prepared, each sample was pulled using a tensile testing machine so that a strain rate obtained by dividing a tensile rate by a gauge length was 0.285 min⁻¹, and the strength was obtained by calculating a cross-sectional area from a tensile breaking force. The ratio of the value L1 of the width of each of the internal rims or the end rims to the value w indicating the depth of welding between the adjacent rims described above is a value where the retention rate is equal to or higher than 80%.

A specific example is as shown in Table 1 below. In Table 1, the left column shows the ratio of the value of the rim width to the value w indicating the depth of welding, that is, the rim width (L1)/the depth of welding (w). On the other hand, the right column shows the tensile strength retention rate (%) corresponding to each of the above ratios.

**[Table 1]**

| L1/w | TENSILE STRENGTH RETENTION RATE (%) |
|---|---|
| 1.8 | 78 |
| 2.0 | 79 |
| 2.7 | 85 |
| 3.3 | 88 |
| 4. 4 | 93 |
| 4. 4 | 90 |
| 5.0 | 88 |
| 5. 7 | 90 |
| 6.7 | 88 |
| 8.0 | 88 |
| 13.3 | 84 |
| 16.0 | 82 |
| 20.0 | 79 |
| 25.0 | 73 |

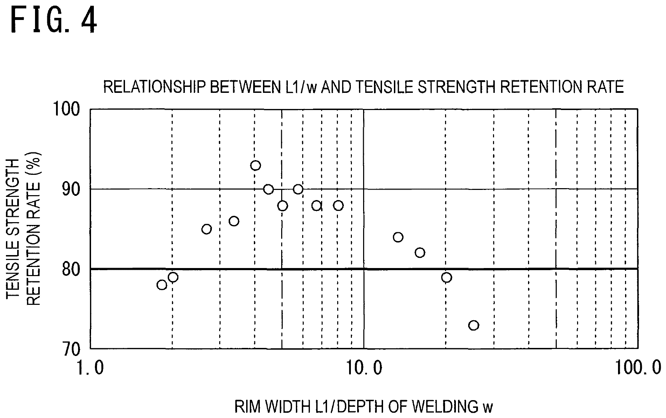

According to Table 1, the ratio of the value of the rim width to the value w indicating the depth of welding where the tensile strength retention rate (%) exceeds 80% is equal to or higher than 2.7 times and is equal to or lower than 16.0 times. In addition, FIG. 4 illustrates this relationship in a graph.

FIG. 4 is a graph illustrating test results of the tensile test obtained for the embodiment of the present invention. In the graph illustrated in FIG. 4, the horizontal axis represents the ratio of the value of the rim width to the value w indicating the depth of welding. On the other hand, the vertical axis represents the tensile strength retention rate (%) corresponding to the ratio. In the graph, the horizontal axis on which the above tensile strength retention rate (%) is 80% is emphasized. As represented in the graph, the ratio of the value of the rim width to the value w indicating the depth of welding at which the tensile strength retention rate (%) exceeds 80% is equal to or higher than 2.7 times and is equal to or lower than 16.0 times.

In addition, here, the ratio of the value L1 of the width of each of the internal rims or the end rims to the value w indicating the depth of welding is equal to or higher than 2.7 times and is equal to or lower than 16.0 times, but it is particularly preferable that the depth of welding be set such that the ratio is equal to or higher than 2.7 and is equal to or lower than 8.0.

Note that this ratio is applied not only to the case of welding joining between the internal rims 112 of the internal frame units 11, but also to the case of welding joining between the internal rim 112 and the first end rim 122 constituting the first end frame unit 12, and to the case of welding joining between the internal rim 112 and the second end rim 132 constituting the second end frame unit 13.

In addition, for the value L1 of the width of each of the internal rims or the end rims, a relationship with the thickness of the bipolar plate 111 can be further taken into consideration. Here, the thickness of the bipolar plate 111 is a value indicated by reference character L2 in FIG. 2 between the one surface on which the positive pole 120 is provided and the other surface on which the negative pole 110 is provided. Specifically, a ratio of the value L1 of the width of the internal rim 112 to the value L2 indicating the thickness of the bipolar plate 111 is equal to or higher than 2.0 times and is equal to or lower than 3.5 times.

Table 2 below shows a relationship between such a ratio of the value L1 of the width of the internal rim 112 to the value L2 indicating the thickness of the bipolar plate 111, and the tensile strength retention rate (%).

**[Table 2]**

| L1/L2 | TENSILE STRENGTH RETENTION RATE (%) |
|---|---|
| 1.3 | 78 |
| 1.9 | 79 |
| 2.0 | 93 |
| 2.4 | 90 |
| 3.5 | 88 |
| 3.6 | 79 |
| fi. 7 | 73 |

In Table 2, the left column shows the ratio of the value L1 of the width of the internal rim 112 to the value L2 indicating the thickness of the bipolar plate 111, that is, L1/L2. On the other hand, the right column shows the tensile strength retention rate (%) corresponding to each of the above ratios. As shown in Table 2, the tensile strength retention rate (%) has a value exceeding 80% when the above ratio is equal to or higher than 2.0 times and is equal to or lower than 3.5 times.

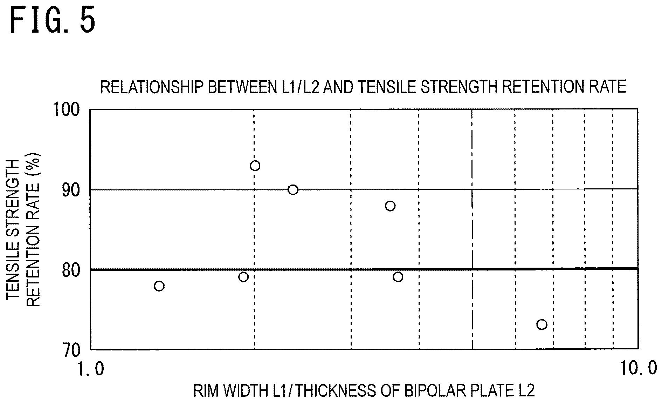

Table 2 is represented as a graph in FIG. 5. FIG. 5 is a graph illustrating test results obtained for the embodiment of the present invention. Similarly to FIG. 4, the horizontal axis on which the tensile strength retention rate (%) is 80% is emphasized. The tensile strength retention rate (%) exceeds 80% when the above ratio is equal to or higher than 2.0 times and is equal to or lower than 3.5 times.

It is not preferable that the above ratio is equal to or higher than 3.5 times because the strength is easily reduced, and it is not preferable that the above ratio is equal to or lower than 2.0 times because it is difficult to dissipate heat. On the other hand, when the above ratio is equal to or higher than 2.0 times and is equal to or lower than 3.5 times, it is possible to achieve weight reduction and size reduction while reducing a decrease in strength and a decrease in heat dissipation, thereby providing the bipolar storage battery having high energy density, which is very preferable.

Here, since the value L1 of the rim width is described using FIG. 2, the width of the internal rim 112 in the internal frame unit 11 is used as an example. However, the value L1 of the rim width may be the value of the width of the first end rim 122 of the first end frame unit 12 or the value of the width of the second end rim 132 of the second end frame unit 13.

Although the rim width has various lengths, the rim width can be preferably selected from a range of 2.0 mm to 10.0 mm, for example.

As described above, it is possible to strongly join together the plates each holding the cell member by joining the rims at the above-described ratio and by setting the thickness of the rim and the thickness of the bipolar plate so as to satisfy the above-described ratio when the joining is performed. By strongly joining the plates together, it is possible to prevent outward leakage of the electrolytic solution and reduction of mechanical strength to ensure hermeticity of the inside of the cell and the mechanical strength.

In addition, since the hermeticity and mechanical strength of the bipolar storage battery can be ensured by using only required constituent elements for constituting the bipolar storage battery, it is possible to make the bipolar storage battery compact while reducing the number of components.

In addition, as described above, in the embodiment of the present invention, the bipolar lead-acid battery has been described as an example. However, when the aforementioned descriptive content applies to other storage batteries in which other metals (for example, aluminum, copper, or nickel), alloys, or conductive resins are used instead of lead for a current collector, such application is naturally not excluded.

### Reference Signs List

- 1: bipolar lead-acid battery
- 11: internal frame unit
- 12: first end frame unit
- 13: second end frame unit
- 101: positive lead layer
- 102: negative lead layer
- 103: positive active material layer
- 104: negative active material layer
- 105: electrolytic layer
- 110: negative pole
- 111: bipolar plate
- 112: rim
- 120: positive pole
- 121: first end plate
- 122: first end rim
- 130: cell member
- 131: second end plate
- 132: second end rim
- 140: bipolar electrode

## Claims

1. A bipolar storage battery comprising:
an internal frame unit including a bipolar plate in which a positive pole is provided on one surface and a negative pole is provided on another surface, and an internal rim provided in an outer edge of the bipolar plate; and
an end frame unit including an end plate constituting a cell in conjunction with the bipolar plate facing the end plate, and an end rim provided in an outer edge of the end plate,
a plurality of the internal frame units being stacked and the end frame unit being provided in each of opposite ends along a direction in which the internal frame units are stacked,
adjacent ones of the internal rims being welded to each other and one of the internal rims and the end rim adjacent to each other being welded to each other, wherein
a ratio of a value of a width of the internal rim or the end rim to a value indicating a depth of welding between the rims is equal to or higher than 2.7 times and is equal to or lower than 16.0 times.

2. The bipolar storage battery according to claim 1, wherein a ratio of the value of the width of the internal rim or the end rim to a value indicating a thickness of the bipolar plate is equal to or higher than 2.0 times and is equal to or lower than 3.5 times.

3. The bipolar storage battery according to claim 1 or 2, wherein the positive pole includes a positive current collector, the negative pole includes a negative current collector, and the positive current collector and the negative current collector are made of lead or a lead alloy.
